# EUROPÄISCHE PATENTSCHRIFT

(11) **EP 4 397 566 B1**
(45) Veröffentlichungstag und Bekanntmachung des Hinweises auf die Patenterteilung: **08.04.2026**
(21) Anmeldenummer: 23217501.8
(22) Anmeldetag: 18.12.2023
(51) Int. Cl.: B62B 1/22, B62B 1/26, B62B 5/00

(54) **LASTBEFÖRDERUNGSVORRICHTUNG**
LOAD CARRYING DEVICE
DISPOSITIF DE TRANSPORT DE CHARGE

(30) Priorität: 09.01.2023 DE 102023100271
(43) Veröffentlichungstag der Anmeldung: 10.07.2024
(73) Patentinhaber: Viessmann Holding International GmbH, 35108 Allendorf (Eder) (DE)
(72) Erfinder: Mülller, Marco, 35066 Frankenberg (DE)
(74) Vertreter: Wolf & Wolf Patentanwaltsgesellschaft mbH

(56) Entgegenhaltungen:
- DE-U1- 9 400 635
- US-A- 3 667 728
- US-A1- 2005 254 924
- US-A1- 2011 274 526
- US-B1- 10 272 935

## Beschreibung

Die Erfindung betrifft eine Lastbeförderungsvorrichtung gemäß dem Oberbegriff des Patentanspruchs 1.

Eine Lastbeförderungsvorrichtung der eingangs genannten Art ist aus dem Dokument US 267 357 A bekannt.

Eine weitere Lastbeförderungsvorrichtung ist aus dem Dokument DE 94 00 635 U1 bekannt. Eine Ausführungsform dieser Lastbeförderungsvorrichtung besteht aus einer auf einer Transportpalette angeordneten Last, zwei Hauptträgerelementen zum Handhaben der Last und an freien Enden der Hauptträgerelemente angeordneten Räder zur rollenden Beförderung der Last. Bei einer anderen Ausführungsform dieser Lösung ist die ohne Transportpalette bereitgestellte Last auf die beiden Hauptträgerelemente aufgesetzt.

Weitere Lastbeförderungsvorrichtungen sind aus der US 2005/254924 A1, aus der US 2011/274526 A1 und aus der US 3,667,728 A bekannt.

Der Erfindung liegt die Aufgabe zugrunde, eine Lastbeförderungsvorrichtung der eingangs genannten Art zu verbessern. Insbesondere soll eine Lastbeförderungsvorrichtung geschaffen werden, mit der die Last auf einfache Weise angehoben (bevorzugt von einer Transportpalette abgehoben), nach dem Anheben (bzw. abheben) weiter transportiert und schließlich wieder einfach (zum Beispiel auf einer dafür vorgesehenen Bodenkonsole oder Montageplattform) abgesetzt werden kann.

Diese Aufgabe ist mit einer Lastbeförderungsvorrichtung der eingangs genannten Art durch die im Kennzeichen des Patentanspruchs 1 aufgeführten Merkmale gelöst.

Nach der Erfindung ist also vorgesehen, dass an der Last eine erste und eine zweite Durchgangsöffnung zur Aufnahme des ersten bzw. zweiten Querträgers vorgesehen ist, wobei die Last zwischen den beiden Hauptträgerelementen angeordnet ist und dass die Hauptträgerelemente zum Anheben der Last durch Unterhebeln der Räder drehbar mit der Last verbunden ausgebildet sind.

Die Maßgabe "Unterhebeln" bedeutet dabei, dass die Räder durch Verschwenken der Hauptträgerelemente um die Last gegen den Boden gedrückt werden und dabei die Last an- und vorzugsweise gleichzeitig von der vorgenannten Transportpalette abheben.

Mit anderen Worten zeichnet sich die erfindungsgemäße Lösung somit dadurch aus, dass die Kombination aus drehbar an der Last gelagertem Hauptträgerelement und Rad einen Hebel zum (vergleichsweise leichten) Anheben der Last bilden. Wie weiter unten noch genauer erläutert wird, ermöglicht es diese Lösung, eine vorzugsweise auf einer Transportpalette gelieferte Last mit der Lastbeförderungsvorrichtung von der Transportpalette abzuheben und dann rollend weiter zu transportieren. Besonders bevorzugt handelt es sich bei der Last dabei um ein wärmetechnisches Gerät, besonders bevorzugt um eine Wärmepumpe, insbesondere ein Außengerät einer Wärmepumpe, das bzw. die mit der Lastbeförderungsvorrichtung von der Transportpalette zu seinem bzw. ihrem finalen Aufstellungsort befördert werden soll.

Andere vorteilhafte Weiterbildungen der erfindungsgemäßen Lastbeförderungsvorrichtung ergeben sich aus den abhängigen Patentansprüchen.

Der Vollständigkeit halber wird auf das nachveröffentlichte Dokument DE 10 2021 117 372 A1 hingewiesen. Bei dieser Lösung ist allerdings kein Unterhebeln der Räder vorgesehen.

Die erfindungsgemäße Lastbeförderungsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch die erfindungsgemäße Lastbeförderungsvorrichtung während der Anbringung der Hauptträgerelemente am ersten Querträger;
- Figur 2: perspektivisch die Lastbeförderungsvorrichtung gemäß Figur 1 während des Unterhebelns der Räder und Anheben der Last bzw. Abheben der Last von der Transportpalette;
- Figur 3: perspektivisch die Lastbeförderungsvorrichtung gemäß Figur 2 nach dem Überschwenken und während der Anbringung des zweiten Querträgers an den Hauptträgerelementen;
- Figur 4: perspektivisch die Lastbeförderungsvorrichtung gemäß Figur 3 während der Handhabung der Last;
- Figur 5: perspektivisch die Lastbeförderungsvorrichtung gemäß Figur 4 beim Absetzen der Last auf eine Tragkonsole;
- Figur 6: in Rückansicht die Lastbeförderungsvorrichtung gemäß Figur 4 (ohne Last);
- Figur 7: als Schnitt A-A die Lastbeförderungsvorrichtung gemäß Figur 6;
- Figur 8: perspektivisch der erste Querträger für die erfindungsgemäße Lastbeförderungsvorrichtung; und
- Figur 9: perspektisch von unten die Lastbeförderungsvorrichtung gemäß Figur 6, allerdings mit einem zeichnerisch teilweise weggelassenen Hauptträgerelement.

Die in den Figuren dargestellte Lastbeförderungsvorrichtung besteht in bekannter Weise aus einer Last 1, zwei Hauptträgerelementen 2 zum Handhaben der Last 1 und an freien Enden der Hauptträgerelemente 2 angeordneten Rädern 3 zur rollenden Beförderung der Last 1. Das bzw. jedes Rad 3 weist dabei vorzugsweise einen Durchmesser von mindestens 10 cm, besonders bevorzugt von mindestens 20 cm, ganz besonders bevorzugt 30 cm auf.

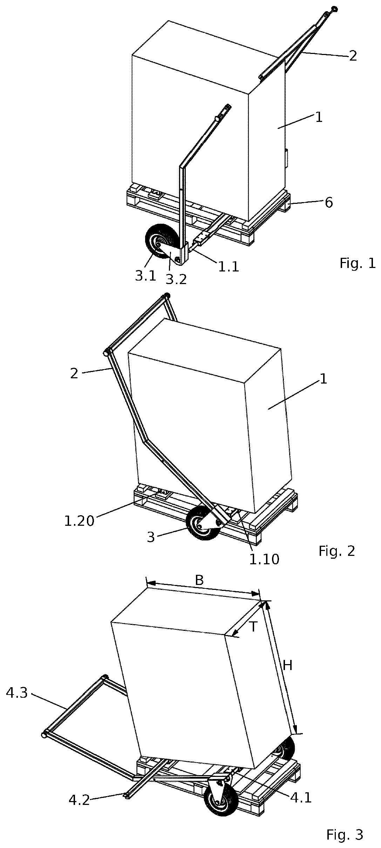

Bezüglich der Last 1 ist dabei bevorzugt vorgesehen, dass diese quaderförmig mit einer Breite B, Höhe H und Tiefe T ausgebildet ist, wobei sowohl die Breite als auch die Höhe jeweils größer als die Tiefe sind (siehe hierzu auch Figur 3). Die Breite und Höhe beträgt dabei vorzugsweise mehr als 70 cm, während die Tiefe vorzugsweise weniger als 70 cm beträgt. Wie eingangs bereits ausgeführt, handelt es sich bei der Last 1 vorzugsweise um ein wärmetechnisches Gerät, insbesondere um eine Wärmepumpe, besonders bevorzugt um eine im Freien aufgestellte Wärmepumpe.

Ferner ist vorgesehen, dass die Last 1 zwischen den beiden Hauptträgerelementen 2 angeordnet ist und dass die Hauptträgerelemente 2 zum Anheben der Last 1 durch Unterhebeln der Räder 3 drehbar mit der Last 1 verbunden ausgebildet sind. Besonders bevorzugt (aber nicht zwingend) ist dabei, wie eingangs bereits ausgeführt, dass die Last 1 beim Unterhebeln der Räder 3 auf einer Transportpalette 6 angeordnet ist.

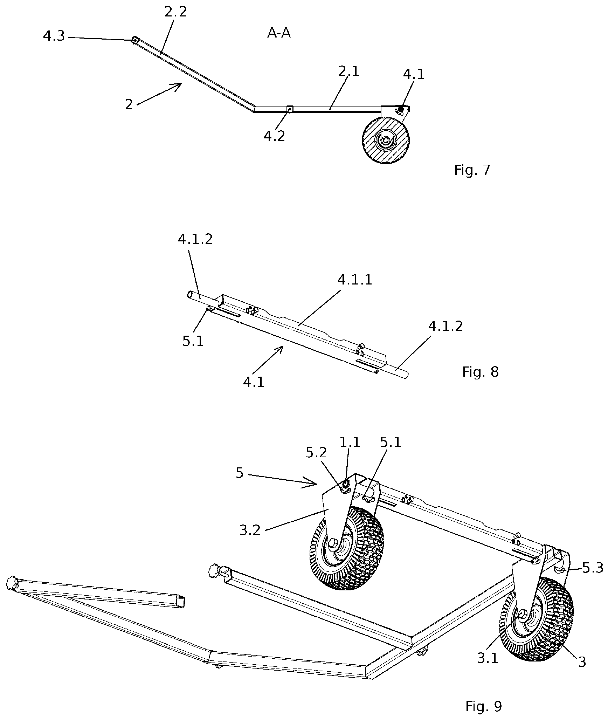

Etwas genauer betrachtet, ist dabei zur Realisieurng des besagten Unterhebelns weiterhin bevorzugt vorgesehen, dass eine Drehachse 1.1 zwischen der Last 1 und dem Hauptträgerelement 2 und eine Drehachse 3.1 des Rades 3 parallel beabstandet zueinander angeordnet sind. Dabei ist ferner bevorzugt vorgesehen, dass ein Abstand zwischen den beiden Drehachsen 1.1, 3.1 mindestens 5 cm, vorzugsweise mindestens 10 cm, beträgt. Ferner ist insbesondere mit Verweis auf Figur 1 besonders bevorzugt vorgesehen, dass an einem freien Ende des Hauptträgerelements 2 eine einen zum Unterhebeln dienenden Hebel bildende Halteeinrichtung 3.2 für das Rad 3 angeordnet ist. Dabei sind die besagten Drehachsen 1.1, 3.1 vorzugsweise (siehe hierzu auch Figur 9) an zueinander abgewandten Enden der Halteeinrichtung 3.2 angeordnet. Außerdem ist bevorzugt vorgesehen, dass die Halteeinrichtung 3.2 aus Blech, vorzugsweise aus zwei abgewinkelten, das Rad 3 zwischen sich aufnehmenden Blechstücken, gebildet ist.

Weiterhin ist bevorzugt vorgesehen, dass sich ein bzw. der Schwerpunkt der Last 1 beim Bewegen der Lastbeförderungsvorrichtung möglichst senkrecht oberhalb der Drehachse 1.1 befindet. Die Maßgabe "möglichst" berücksichtigt dabei, dass natürlich auch Abweichungen vertretbar bzw. denkbar sind, sofern diese nicht zu groß sind, d. h. bevorzugt sollte eine seitliche Verschiebung des Schwerpunkts von der Drehachse 1.1 nicht mehr als 30 cm, ganz besonders bevorzugt nicht mehr als 20 cm betragen.

Weiterhin ist bei der erfindungsgemäßen Lösung ein erster, zweiter und dritter Querträger 4.1, 4.2, 4.3 zur Verbindung der beiden Hauptträgerelemente 2 vorgesehen. Dabei ist weiterhin bevorzugt vorgesehen, dass die Hauptträgerelemente 2 und wahlweise der erste, zweite und/oder dritte Querträger 4.1, 4.2, 4.3 rechtwinklig zueinander angeordnet sind. Außerdem ist bevorzugt vorgesehen, dass wahlweise der erste, zweite und/oder dritte Querträger 4.1, 4.2, 4.3 während der Lastbeförderung parallel zur Tiefenerstreckungsrichtung (siehe oben) der Last 1 verlaufend angeordnet ist.

Insbesondere mit Verweis auf Figur 2 ist ferner noch bevorzugt vorgesehen, dass zur Realisierung einer Überschwenkbarkeit (bei nicht montiertem zweiten Querträger 4.2) ein Abstand zwischen dem ersten und dritten Querträger 4.1, 4.3 größer als eine Länge einer Diagonalen einer durch die Breite und Höhe der Last 1 definierten Fläche ist. Dabei ist weiterhin noch bevorzugt vorgesehen, dass das Hauptträgerelement 2 aus einem ersten geradlinigen, mit dem ersten und zweiten Querträger 4.1, 4.2 verbundenen Abschnitt 2.1 und aus einem zweiten (ebenfalls) geradlinigen, mit dem dritten Querträger 4.3 verbundenen Abschnitt 2.2 gebildet ist. Mit Verweis auf Figur 7 ist dabei ganz besonders bevorzugt vorgesehen, dass die beiden Abschnitte 2.1, 2.2 vorzugsweise mit einem Winkel zwischen 1° und 45°, besonders bevorzugt 30°, abgewinkelt zueinander angeordnet sind.

Außerdem ist bevorzugt vorgesehen, dass das Hauptträgerelement 2 an seinem mit dem Rad 3 versehenen Ende mit dem ersten Querträger 4.1 verbunden ausgebildet ist. Außerdem ist bevorzugt vorgesehen, dass die beiden Hauptträgerelemente 2 drehbar mit dem ersten Querträger 4.1 verbunden ausgebildet sind. Darüber hinaus ist bevorzugt vorgesehen, dass der erste Querträger 4.1 verdrehfest mit der Last 1 verbunden ausgebildet ist.

Damit sich die Last 1 während der Handhabung nicht von den Hauptträgerelementen 2 lösen kann, ist ferner bevorzugt vorgesehen, dass am Hauptträgerelement 2 und am erster Querträger 4.1 eine Verbindungseinrichtung 5 angeordnet ist, die ein Trennen dieser beiden Teile voneinander nur in einer einzigen Relativposition (siehe Figur 1, also vor dem Unterhebeln) dieser beiden Teile zueinander zulassend ausgebildet ist. Noch etwas genauer betrachtet, ist hierzu besonders bevorzugt vorgesehen (siehe hierzu insbesondere die Figuren 8 und 9), dass die Verbindungseinrichtung 5 einen vorzugsweise am ersten Querträger 4.1 angeordneten Pilzkopf 5.1 und einen vorzugsweise am Hauptträgerelement 2 angeordneten Führungsschlitz 5.2 mit Entnahmestelle 5.3 für den Pilzkopf (in der Stellung gemäß Figur 1) umfasst.

Wesentlich für die erfindungsgemäße Lastbeförderungsvorrichtung ist nun, dass an der Last 1 eine erste und 20 eine zweite Durchgangsöffnung 1.10, 1.20 zur Aufnahme des ersten bzw. zweiten Querträgers 4.1, 4.2 vorgesehen ist. Dabei ist ein Abstand zwischen dem ersten und zweiten Querträger 4.1, 4.2 vorzugsweise kleiner als die Breite der Last 1 ausgebildet. Ferner ist bevorzugt vorgesehen, dass wahlweise die erste und/oder zweite Durchgangsöffnung 1.10, 1.20 einen länglichen Lagerfuß der Last 1 bildet bzw. dass die Durchgangsöffnung 1.10, 1.20 Teil des besagten Lagerfußes ist. Außerdem ist bevorzugt vorgesehen, dass der (bzw. mindestens ein, vorzugsweise alle) Querträger 4.1, 4.2, 4.3 den Lagerfuß beidseitig überragt und breiter als die Last 1 ausgebildet ist. Ferner ist vorzugsweise vorgesehen, dass der Lagerfuß als Teil der Last 1 ausgebildet ist.

Insbesondere mit Verweis auf Figur 8 ist weiterhin bevorzugt vorgesehen, dass der erste Querträger 4.1 einem quaderförmigen Abschnitt 4.1.1 und beidseitig daran angeordnete zylindrische Abschnitte 4.1.2 aufweist. Außerdem ist vorzugsweise vorgesehen, dass der quaderförmige Abschnitt 4.1.1 formpassend zur Durchgangsöffnung 1.10, 1.20 an der Last 1 ausgebildet ist, diese also im Querschnitt rechteckig ist. Ferner ist bevorzugt vorgesehen, dass die zylindrischen Abschnitte 4.1.2 mit den Hauptträgerelementen 2 verbunden ausgebildet sind.

Für eine besonders gute Handhabbarkeit der erfindungsgemäße Lastbeförderungsvorrichtung ist ferner bevorzugt vorgesehen, dass das Hauptträgerelement 2 an seinem vom Rad 3 abgewandten Ende mit dem dritten Querträger 4.3 verbunden ausgebildet ist. Dabei ist weiterhin bevorzugt vorgesehen, dass der dritte Querträger 4.3 als Handgriff zum Handhaben der Last 1 ausgebildet ist.

Bezüglich der Materialauswahl ist schließlich noch bevorzugt vorgesehen, dass wahlweise das Hauptträgerelement 2, mindestens ein Teil des ersten, der zweite und/oder der dritte Querträger 4.1, 4.2, 4.3 aus einem metallischen Rohr, vorzugsweise einem Vierkantrohr, gebildet sind bzw. ist.

Die erfindungsgemäße Lastbeförderungsvorrichtung funktioniert bevorzugt wie folgt:
In einem ersten Schritt (siehe Figur 1) wird der erste Querträger 4.1 durch die erste Durchgangsöffnung 1.10 gesteckt.

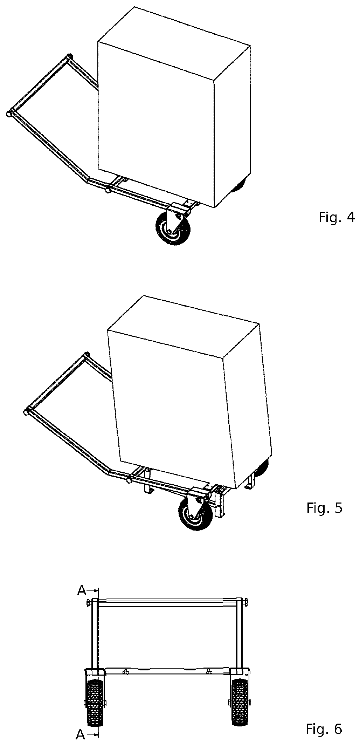

Dann werden die beiden Hauptträgerelemente 2 beidseitig am ersten Querträger 4.1 und damit an der Last 1 befestigt. Außerdem wird der dritte Querträger 4.3 als Handgriff radabgewandt mit den beiden Hauptträgerelementen 2 verbunden. Im nächsten Schritt werden durch Verschwenken der Hauptträgerelemente 2 die Räder 3 unter die Last 1 gehebelt (siehe hierzu Figur 2). Das Verschwenken erfolgt dabei soweit (siehe hierzu Figur 3), dass dann noch der zweite Querträger 4.2 in einer Position oberhalb der beiden Hauptträgerelemente 2 durch die zweite Durchgangsöffnung 1.20 geschoben werden kann. Nach der Befestigung des zweiten Querträgers 4.2 an den Hauptträgerelementen 2 ist die Lastbeförderungsvorrichtung fahrbereit (siehe Figur 4), d. h. die Last 1 kann nunmehr gut lenkbar (weil nur zwei Räder 3) von der Transportpalette 6 weggefahren und zum Beispiel zu einem Montagesockel (siehe Figur 5) verbracht werden. Das Abstellen auf dem besagten Sockel erfolgt entsprechend in umgekehrter Reihenfolge, d. h. durch entsprechendes Verschwenken der Hauptträgerelemente 2 wird die Last 1 so abgesetzt, dass die Räder 3 wieder frei drehen und die Hautträgerelemente 2 von der Last 1 gelöst werden können.

### Bezugszeichenliste

- 1: Last
- 1.1: Drehachse
- 1.10: Durchgangsöffnung
- 1.20: Durchgangsöffnung
- 2: Hauptträgerelement
- 2.1: erster Abschnitt
- 2.2: zweiter Abschnitt
- 3: Rad
- 3.1: Drehachse
- 3.2: Halteeinrichtung
- 4.1: erster Querträger
- 4.1.1: quaderförmiger Abschnitt
- 4.1.2: zylindrischer Abschnitt
- 4.2: zweiter Querträger
- 4.3: dritter Querträger
- 5: Verbindungseinrichtung
- 5.1: Pilzkopf
- 5.2: Führungsschlitz
- 5.3: Entnahmestelle
- 6: Transportpalette

- B: Breite
- H: Höhe
- T: Tiefe

## Patentansprüche

1. Lastbeförderungsvorrichtung, umfassend eine Last (1), zwei Hauptträgerelemente (2) zum Handhaben der Last (1) und an freien Enden der Hauptträgerelemente (2) angeordnete Räder (3) zur rollenden Beförderung der Last (1), wobei die Last (1) zwischen den beiden Hauptträgerelementen (2) angeordnet ist und wobei die Hauptträgerelemente (2) zum Anheben der Last (1) durch Unterhebeln der Räder (3) drehbar mit der Last (1) verbunden ausgebildet sind, wobei ein erster, zweiter und dritter Querträger (4.1, 4.2, 4.3) zur Verbindung der beiden Hauptträgerelemente (2) vorgesehen ist,
**dadurch gekennzeichnet,**
**dass** an der Last (1) eine erste und eine zweite Durchgangsöffnung (1.10, 1.20) zur Aufnahme des ersten bzw. zweiten Querträgers (4.1, 4.2) vorgesehen ist.

2. Lastbeförderungsvorrichtung nach Anspruch 1,
**dadurch gekennzeichnet,**
**dass** eine Drehachse (1.1) zwischen der Last (1) und dem Hauptträgerelement (2) und eine Drehachse (3.1) des Rades (3) parallel beabstandet zueinander angeordnet sind.

3. Lastbeförderungsvorrichtung nach Anspruch 1 oder 2,
**dadurch gekennzeichnet,**
**dass** an einem freien Ende des Hauptträgerelements (2) eine einen zum Unterhebeln dienenden Hebel bildende Halteeinrichtung (3.2) für das Rad (3) angeordnet ist.

4. Lastbeförderungsvorrichtung nach einem der Ansprüche 1 bis 3,
**dadurch gekennzeichnet,**
**dass** das Hauptträgerelement (2) an seinem mit dem Rad (3) versehenen Ende mit dem ersten Querträger (4.1) verbunden ausgebildet ist.

5. Lastbeförderungsvorrichtung nach einem der Ansprüche 1 bis 4,
**dadurch gekennzeichnet,**
**dass** die beiden Hauptträgerelemente (2) drehbar mit dem ersten Querträger (4.1) verbunden ausgebildet sind.

6. Lastbeförderungsvorrichtung nach einem der Ansprüche 1 bis 5,
**dadurch gekennzeichnet,**
**dass** der erste Querträger (4.1) verdrehfest mit der Last (1) verbunden ausgebildet ist.

7. Lastbeförderungsvorrichtung nach einem der Ansprüche 1 bis 6,
**dadurch gekennzeichnet,**
**dass** am Hauptträgerelement (2) und am ersten Querträger (4.1) eine Verbindungseinrichtung (5) angeordnet ist, die ein Trennen dieser beiden Teile voneinander nur in einer einzigen Relativposition dieser beiden Teile zueinander zulassend ausgebildet ist.

8. Lastbeförderungsvorrichtung nach Anspruch 7,
**dadurch gekennzeichnet,**
**dass** die Verbindungseinrichtung (5) einen Pilzkopf (5.1) und einen Führungsschlitz (5.2) mit Entnahmestelle (5.3) für den Pilzkopf umfasst.

9. Lastbeförderungsvorrichtung nach einem der Ansprüche 1 bis 8,
**dadurch gekennzeichnet,**
**dass** das Hauptträgerelement (2) an seinem vom Rad (3) abgewandten Ende mit dem dritten Querträger (4.3) verbunden ausgebildet ist.

10. Lastbeförderungsvorrichtung nach einem der Ansprüche 1 bis 9,
**dadurch gekennzeichnet,**
**dass** der dritte Querträger (4.3) als Handgriff zum Handhaben der Last (1) ausgebildet ist.

11. Lastbeförderungsvorrichtung nach einem der Ansprüche 1 bis 10,
**dadurch gekennzeichnet,**
**dass** die Last (1) quaderförmig mit einer Breite, Höhe und Tiefe ausgebildet ist, wobei sowohl die Breite als auch die Höhe jeweils größer als die Tiefe sind.

12. Lastbeförderungsvorrichtung nach Anspruch 11,
**dadurch gekennzeichnet,**
**dass** zur Realisierung einer Überschwenkbarkeit ein Abstand zwischen dem ersten und dritten Querträger (4.1, 4.3) größer als eine Länge einer Diagonalen einer durch die Breite und Höhe der Last (1) definierten Fläche ist.

13. Lastbeförderungsvorrichtung nach einem der Ansprüche 1 bis 12,
**dadurch gekennzeichnet,**
**dass** die Last (1) beim Unterhebeln der Räder (3) auf einer Transportpalette (6) angeordnet ist.

## Claims

1. A load conveying device, comprising a load (1), two main carrier members (2) for handling the load (1) and wheels (3) arranged at free ends of the main carrier members (2) for the rolling conveyance of the load (1), wherein the load (1) is arranged between the two main carrier members (2) and wherein the main carrier members (2) are formed rotatably connected to the load (1) by under-levering the wheels (3) for lifting the load (1), wherein a first, second and third cross member (4.1, 4.2, 4.3) is provided for connecting the two main carrier members (2),
**characterised in that**
a first and a second through-opening (1.10, 1.20) is provided on the load (1) for receiving the first or second cross member (4.1, 4.2).

2. A load conveying device according to claim 1,
**characterised in that**
a rotation axis (1.1) between the load (1) and the main carrier member (2) and a rotation axis (3.1) of the wheel (3) are arranged in parallel spaced apart from one another.

3. The load conveying device according to claim 1 or 2,
**characterised in that**
a holding device (3.2) for the wheel (3) forming a lever serving for under-levering is arranged at a free end of the main carrier member (2).

4. The load conveying device according to any one of claims 1 to 3,
**characterised in that**
the main carrier member (2) is formed connected to the first cross member (4.1) at its end provided with the wheel (3)

5. The load conveying device according to any one of claims 1 to 4,
**characterised in that**
the two main carrier members (2) are formed connected rotatably to the first cross member (4.1).

6. The load conveying device according to any one of claims 1 to 5,
**characterised in that**
the first cross member (4.1) is formed connected rotationally fixed to the load (1).

7. The load conveying device according to any one of claims 1 to 6,
**characterised in that**
a connecting device (5) is arranged on the main carrier member (2) and on the first cross member (4.1), which is designed to permit a separation of these two parts from one another only in a single relative position of these two parts to one another.

8. The load conveying device according to claim 7, **characterised in that**
the connecting device (5) comprises a mushroom head (5.1) and a guide slot (5.2) with a withdrawal point (5.3) for the mushroom head.

9. The load conveying device according to any one of claims 1 to 8,
**characterised in that**
the main carrier member (2) at its end facing away from the wheel (3) is formed connected to the third cross member (4.3).

10. The load conveying device according to any one of claims 1 to 9,
**characterised in that**
the third cross member (4.3) is designed as a handle for handling the load (1).

11. The load conveying device according to any one of claims 1 to 10,
**characterised in that**
the load (1) is designed cuboid with a width, height and depth, wherein both the width and the height are each greater than the depth.

12. The load conveying device according to claim 11,
**characterised in that**
a distance between the first and third cross members (4.1, 4.3) is greater than a length of a diagonal of an area defined by the width and height of the load (1) in order to implement a swivelling-over.

13. The load conveying device according to any one of claims 1 to 12,
**characterised in that**
the load (1) is arranged on a transport pallet (6) when the wheels (3) are under-levered.

## Revendications

1. Dispositif de transport de charges, comprenant une charge (1), deux éléments de support (2) principaux pour la manipulation de la charge (1) et des roues (3) placées sur des extrémités libres des éléments de support (2) principaux pour le transport roulant de la charge (1), la charge (1) étant placée entre les deux éléments de support (2) principaux et pour relever la charge (1) par soulèvement par levier des roues (3), les éléments de support (2) principaux étant conçus de sorte à être reliés de manière rotative avec la charge (1), une première, deuxième et troisième traverse (4.1, 4.2, 4.3) étant prévues pour relier les deux éléments de support (2) principaux,
**caractérisé**
**en ce que** sur la charge (1) est prévue un premier et un deuxième orifice de passage (1.10, 1.20), pour recevoir la première ou la deuxième traverse (4.1, 4.2).

2. Dispositif de transport de charges selon la revendication 1,
**caractérisé**
**en ce qu'**un axe de rotation (1.1) entre la charge (1) et l'élément de support (2) principal et un axe de rotation (3.1) de la roue (3) sont placés à la parallèle avec un écart mutuel.

3. Dispositif de transport de charges selon la revendication 1 ou 2,
**caractérisé**
**en ce que** sur une extrémité libre de l'élément de support (2) principal est disposé un système de maintien (3.2) pour la roue (3) constituant un levier servant à soulever par levier.

4. Dispositif de transport de charges selon l'une quelconque des revendications 1 à 3,
**caractérisé**
**en ce que** l'élément de support (2) principal est conçu en étant relié avec la première traverse (4.1) sur son extrémité munie avec la roue (3).

5. Dispositif de transport de charges selon l'une quelconque des revendications 1 à 4,
**caractérisé**
**en ce que** les deux éléments de support (2) principaux sont conçus en étant reliés de manière rotative avec la première traverse (4.1).

6. Dispositif de transport de charges selon l'une quelconque des revendications 1 à 5,
**caractérisé**
**en ce que** la première traverse (4.1) est conçue en étant reliée de manière solidaire en rotation avec la charge (1).

7. Dispositif de transport de charges selon l'une quelconque des revendications 1 à 6,
**caractérisé**
**en ce que** sur l'élément de support (2) principal et sur la première traverse (4.1) est placé un système de liaison (5) qui est conçu de sorte à n'admettre une désolidarisation desdites deux pièces l'une de l'autre que dans une unique position mutuelle relative desdites deux pièces.

8. Dispositif de transport de charges selon la revendication 7,
**caractérisé**
**en ce que** le système de liaison (5) comprend une cheville champignon (5.1) et une fente de guidage (5.2) pourvue d'un point de retrait (5.3) pour la cheville champignon.

9. Dispositif de transport de charges selon l'une quelconque des revendications 1 à 8,
**caractérisé**
**en ce que** sur son extrémité détournée de la roue (3), l'élément de support (2) principal est conçu en étant relié avec la troisième traverse (4.3).

10. Dispositif de transport de charges selon l'une quelconque des revendications 1 à 9,
**caractérisé**
**en ce que** la troisième traverse (4.3) est conçue sous la forme d'une poignée, pour la manipulation de la charge (1).

11. Dispositif de transport de charges selon l'une quelconque des revendications 1 à 10,
**caractérisé**
**en ce que** la charge (1) est conçue de forme parallélépipédique avec une largeur, une hauteur et une profondeur, aussi bien la largeur qu'également la hauteur étant chacune supérieure à la profondeur.

12. Dispositif de transport de charges selon la revendication 11,
**caractérisé**
**en ce que** pour réaliser une possibilité de surpivotement, un écart entre la première et la troisième traverse (4.1, 4.3) est supérieur à une longueur d'une diagonale d'une surface définie par la largeur et la hauteur de la charge (1).

13. Dispositif de transport de charges selon l'une quelconque des revendications 1 à 12,
**caractérisé**
**en ce que**, lors du soulèvement par levier des roues (3), la charge (1) est placée sur une palette de transport (6).
